(19) **Europäisches Patentamt**

**European Patent Office**

**Office européen des brevets**

(11) Veröffentlichungsnummer: **0 138 869**
**B1**

(12) **EUROPÄISCHE PATENTSCHRIFT**

(45) Veröffentlichungstag der Patentschrift:
**22.06.88**

(21) Anmeldenummer: **84901063.2**

(22) Anmeldetag: **14.03.84**

(86) Internationale Anmeldenummer:
**PCT/DE 84/00058**

(87) Internationale Veröffentlichungsnummer:
**WO 84/03761 (27.09.84** Gazette **84/23)**

(51) Int. Cl.⁴: **G 01 B 5/00,** G 01 B 11/00,
G 01 B 21/04

(54) **VORRICHTUNG ZUM EXAKTEN POSITIONIEREN EINES GEGENSTANDES IM RAUM.**

(30) Priorität: **18.03.83 DE 3309737**

(43) Veröffentlichungstag der Anmeldung:
**02.05.85 Patentblatt 85/18**

(45) Bekanntmachung des Hinweises auf die Patenterteilung:
**22.06.88 Patentblatt 88/25**

(84) Benannte Vertragsstaaten:
**FR GB NL SE**

(56) Entgegenhaltungen:
**DE - A - 1 905 909**
**DE - A - 1 918 803**
**DE - B - 1 773 282**
**FR - A - 2 396 954**
**FR - A - 2 468 102**
**US - A - 3 501 840**
**US - A - 3 727 119**

(73) Patentinhaber: **ERNO Raumfahrttechnik Gesellschaft
mit beschränkter Haftung, Hünefeldstrasse 1-5,
D-2800 Bremen (DE)**

(72) Erfinder: **DIERKING, Reinhold, Arster Heerstr. 49,
D-2800 Bremen 61 (DE)**
Erfinder: **FELKAI, Roland, Senator-Theil-Strasse 87,
D-2800 Bremen 61 (DE)**
Erfinder: **HOFER, Bernd, Osnabrücker Strasse 11,
D-2874 Lemwerder (DE)**
Erfinder: **OTTO, Werner, Husumer Strasse 10,
D-2870 Delmenhorst (DE)**
Erfinder: **VOIGT, Heiner, Schröderskamp 9,
D-2803 Weyhe (DE)**

(74) Vertreter: **Schramm, Ewald, Genter Strasse 6,
D-2800 Bremen 66 (DE)**

## Beschreibung

Die Erfindung bezieht sich auf eine Vorrichtung zum exakten Positionieren einer eine die Nahfelder von Satellitenantennen erfassende Messsonde aufweisenden Abtasteinrichtung im Raum.

Zur Beurteilung der Leistungsfähigkeit von Antennen ist es notwendig, das Nahfeld solcher Antennen mit einer Messsonde abzutasten und die dabei erfassten Messergebnisse zum Auswerten zu registrieren. Bei einem solchen Messverfahren muss die Abtasteinrichtung mit der Messsonde zu einer Vielzahl von Raumpositionen eines Gestells gebracht werden, um das Nahfeld aus einer hinreichenden Zahl von Messpunkten zu erfassen und zusammensetzen zu können. Obwohl die auf diese Weise erfassbaren Nahfelder von Antennen (Antennenkeulen) relativ genaue Messergebnisse darstellen, sind solche Messverfahren zur Vermessung von Satellitenantennen zu ungenau.

Satellitenantennen müssen beim Einsatz des Satelliten im Weltraum nicht nur ihre Position im Orbit halten, sondern sie müssen auch extremen Leistungsforderungen genügen. Es ist daher notwendig, das Nahfeld einer solchen Antenne sehr genau zu erfassen, wozu die bekannten Vorrichtungen jedoch nicht in der Lage sind.

Wie aus der DE-A 1 905 909 bekannt, können beliebige Körper, z.B. Automobilkarosserien mit einer Messmaschine vermessen werden. Solche Messmaschinen tasten mit einem an einem Querarm angebrachten Messtaster den zu vermessenden Körper mechanisch ab. Der Querarm ist dabei an einem auf einer Bodenführung positionierbaren Turm höhenverstellbar angebracht. Anstatt eines Querarmes kann am Turm auch eine Plattform angebracht werden, wie z.B. in der FR-A 24 68 102 vorgeschlagen. Die Position des Messtasters im Raum kann dabei auch mit einer Lasermessvorrichtung erfasst werden. Eine solche in der FR-A-2 396 945 vorgeschlagene Massnahme erlaubt es Fehler in der Gleitführung des Gestells zu ermitteln und auszugleichen.

Der in Anspruch 1 angegebenen Erfindung liegt daher die Aufgabe zugrunde, eine Vorrichtung der eingangs genannten Art vorzusehen, die Messungen an beliebigen Raumpunkten mit grosser Genauigkeit erlaubt.

Die Merkmale der Vorrichtung nach Anspruch 1 führen zu einer Vorrichtung, mit welcher die Messsonde über den als Abtastvorrichtung wirkenden Präzisionskoordinatentisch in jede beliebige Raumposition innerhalb des von den Abmassen der Vorrichtung bestimmten Raumes positionierbar ist. Es können daher Nahfelderfassungen von beliebigen Positionen bzw. kontinuierliche Abtastvorgänge durch Verfahren der Messsonde durchgeführt werden.

Die Lasermesseinrichtungen gewährleisten in horizontaler bzw. vertikaler Richtung exakte Raumpositionen für die Messsonde, die sich bei entsprechend grosser Raumabmessung aufgrund unvermeidlicher thermischer Verformung des Turmes sonst nicht einhalten lassen.

Der sichere Stand des Turmes gewährleistet ein Verfahren ohne Störschwingungen, wofür einerseits die Justiereinrichtungen und andererseits ein geschlossener Querschnitt der Stützbeine (Trägheitsmoment) beiträgt. Vorteilhafte Weiterbildungen der Erfindung sind in den Ansprüchen 2 bis 8 enthalten.

Die Erfindung wird anhand der beiliegenden Zeichnung näher erläutert. Es zeigen:

Fig. 1 eine Vorrichtung zum Positionieren einer Messsonde im Raum,
Fig. 2 einen Kugelgewindetrieb,
Fig. 3 ein Blockschaltbild zur Positionssteuerung der Messsonde auf dem Koordinatentisch,
Fig. 4 ein Blockschaltbild zur Erzeugung und Verwertung von Positionssteuersignalen.

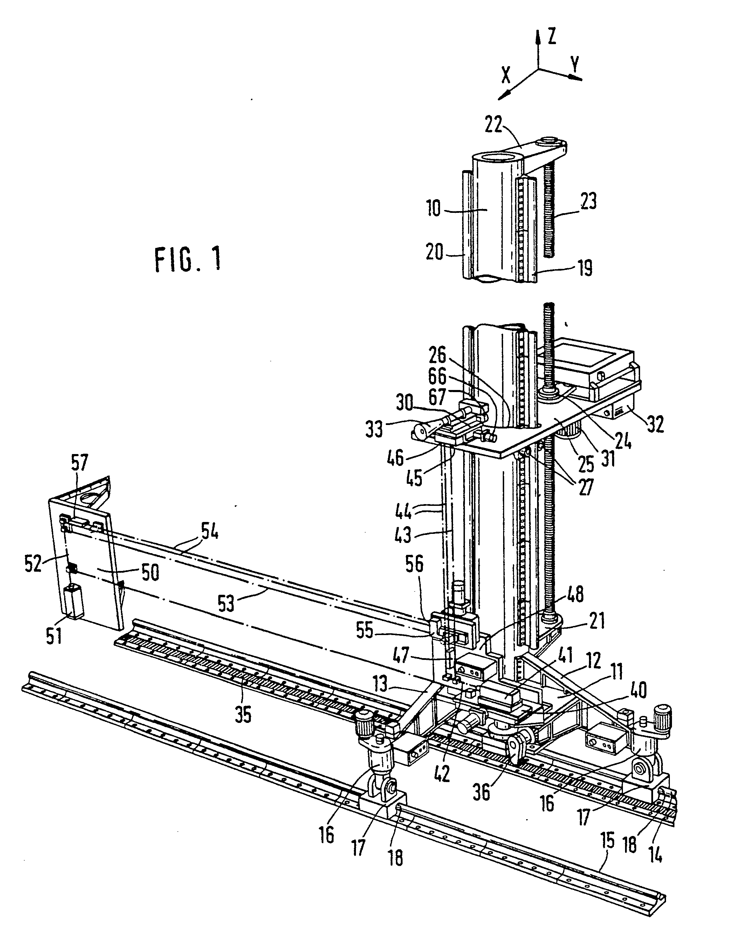

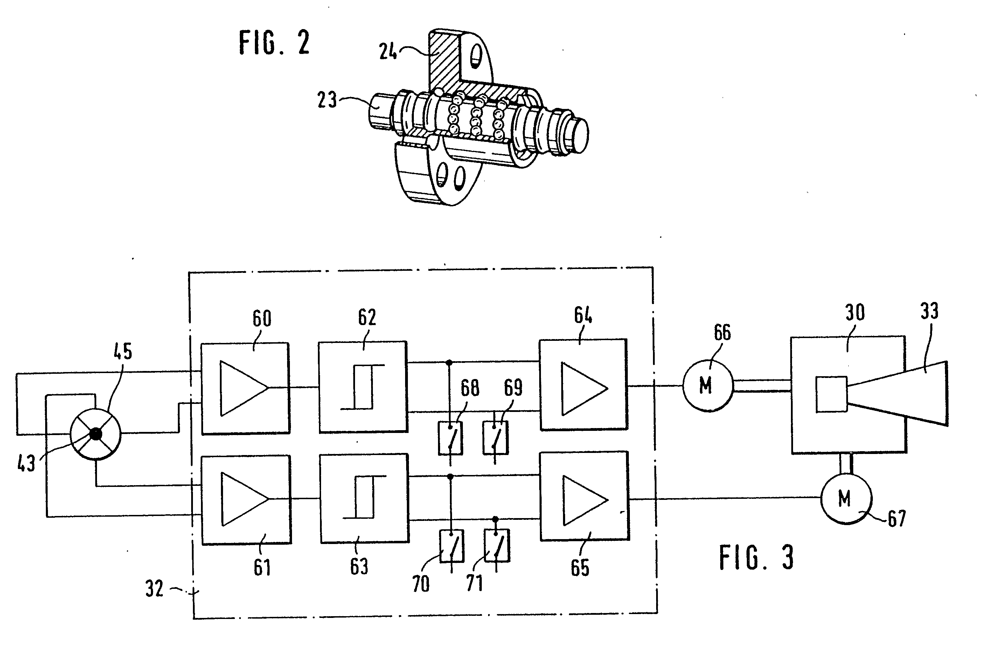

In der Darstellung nach Fig. 1 ist ein Turm 10 zu sehen, der mit seinem Turmfuss 11 und zwei Stützschienen 12, 13 auf zwei Führungsschienen 14, 15 einer Bodenführung steht. Die einen I-Querschnitt aufweisenden Stützbeine 12, 13 sind um 90° zueinander versetzt und besitzen an ihren Enden Justiereinrichtungen 16 sowie Stützfüsse 17 mit Radial-Kugelbüchsen-Führungen 18, in welche jeweils eine der Führungsschienen 14, 15 eingreift. Ebenso wie die Stützbeine 12, 13 ist am Turmfuss 11 ein Stützfuss vorgesehen, welcher mit einer Radialkugelbüchse zum Eingriff der Führungsschiene 14 der Bodenführung versehen ist. Der Turm 10, der je nach abzutastendem Raum bis zu 12 m betragen kann, besteht aus einem Rohr mit diagonal gegenüberliegenden Führungsschienen 19, 20 und zwei Auslegern 21, 22, die am Turmfuss 11 bzw. an der Turmspitze vorgesehen sind. Zwischen beiden Auslegern 21, 22 ist eine parallel zum Turm 10 stehende Spindel 23 unverdrehbar befestigt. Auf diese Spindel 23 ist ein Kugelgewindemutter 24 aufgeschraubt, die den in Fig. 2 dargestellten Kugelgewindetrieb bilden. Die Kugelgewindemutter 24 ist in einer Plattform 25 drehbar gelagert, welche einen Turmdurchgang 26 für den Turm 10 aufweist. An der Plattform 25 sind drei Führungsrollen 27 angebracht, welche jeweils die Führungsschienen 19, 20 zwischen sich aufnehmen und die Plattform 25 in der Hochachse (Z-Koordinate) führen.

Die Plattform 25 besteht aus einem flachen Bauteil – hergestellt z.B. in sogenannter Sandwichbauweise (Schichtbauweise) – und trägt auf ihrem Vorderteil einen Präzisionskoordinatentisch 30 und auf ihrem Hinterteil die Kugelgewindemutter 24 sowie einen damit gekoppelten Elektromotor 31. Ausserdem sind auf dem Hinterteil der Plattform 25 Baugruppen 32 zur elektronischen Steuerung angebracht, welche gleichzeitig für einen gewichtsmässigen Ausgleich gegenüber dem Vorderteil herangezogen werden. Auf dem Präzisionskoordinatentisch 30 ist eine nach vorn gerichtete (X-Koordinate) Messsonde 33 angebracht, welche durch Verstellung des Präzisionskoordinatentisches 30 in der X- und Y-Koordinate (Koordinatenrichtung) positionierbar ist.

Die Verstellung kann über einen elektronisch steuerbaren Antrieb, z.B. einen Schrittmotor 67, erfolgen. Zum Positionieren des Turmes in der dritten Raumkoordinate (Y-Koordinate) dient eine neben der Führungsschiene 14 angeordnete Zahnstange 35, in welche ein Abtriebsritzel eines Elektromotors 36, z.B. ein Schrittmotor, eingreift. Dieser Elektromotor 36 ist am Turmfuss 11 in entsprechender Position befestigt.

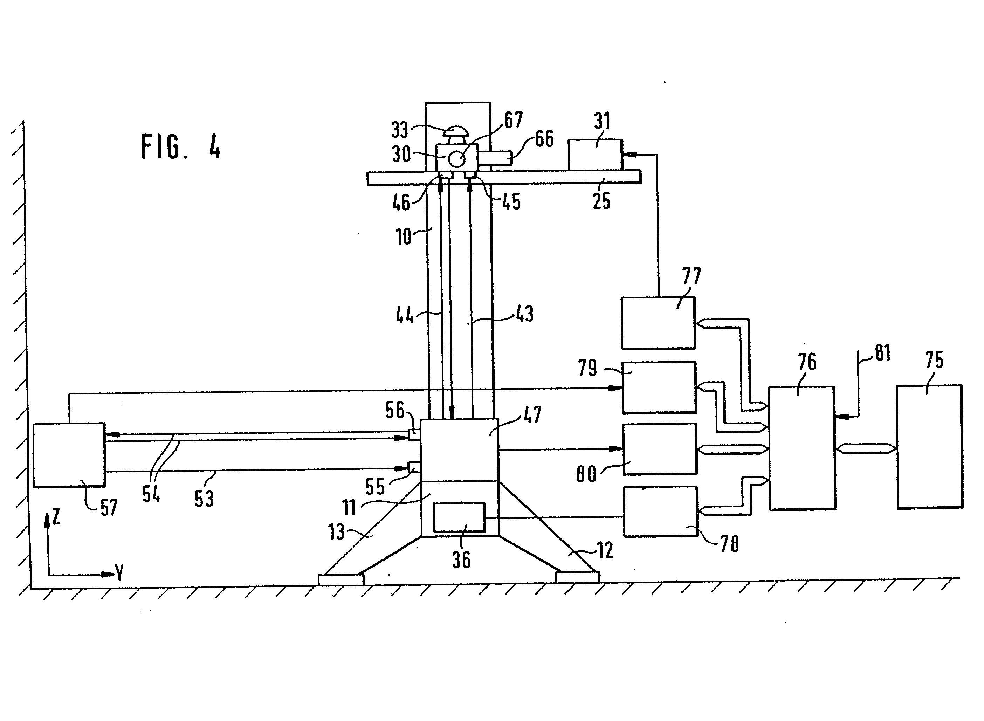

Am Turmfuss 11 ist weiterhin eine Messplatte 40 vorgesehen, auf welcher ein Laser 41 einer Lasermesseinrichtung angeordnet ist. Der Laserstrahl 42 des Lasers 41 wird zunächst mit einem Strahlteiler in einen Leitstrahl 43 und in einen Messstrahl 44 aufgeteilt und beide Strahlen werden auf die an der Plattform 25 angebrachten Präzisionskoordinatentische 30 gerichtet. Der Leitstrahl 43 trifft dort auf eine Quadrantendiode 45, während der Messstrahl von einem Reflektor 46 zu einem Laserentfernungsmesser 47 zurückgelenkt wird. Auf diese Weise werden in der Z-Koordinate sowohl die Entfernung als auch die Position zur Sollage mit Hilfe der Quadrantendiode 45 erfasst, deren Positionssignale einer im Zusammenhang mit Fig. 3 und Fig. 4 noch zu erläuternden Motorsteuerung zugeführt werden.

Neben diesem für die Z-Koordinate benutzten Laser 41 ist ein weiterer Laser 51 vorgesehen, der auf einer ortsfesten Messplatte 50 sitzt. Diese ortsfeste Messplatte 50 ist an einem Ende der die Bodenführung bildenden Führungsschienen 14, 15 zugeordnet, und sein Laserstrahl 52 wird mittels eines Strahlteilers ebenfalls in einen Leitstrahl 53 und einen Messstrahl 54 aufgeteilt. Beide Strahlen 53, 54 werden auf eine Messplatte 48 am Turmfuss 11 gerichtet, wo der Leitrahl 53 auf eine Quadrantendiode 55 trifft, während der Messstrahl 54 von einem Reflektor 56 zu einem Laserentfernungsmesser 57 auf der Messplatte 50 reflektiert wird. Die hierbei gewinnbaren Signale werden als Signale in der Y-Koordinate ebenso wie die der Z-Koordinate einer Rechnersteuerung zugeführt.

Die Darstellung nach Fig. 3 zeigt ein Blockschaltbild eines Zwei-Koordinaten-Regelsystems zur Nachführung der Messsonde 33. Ein Laserstrahl, z.B. der in Z-Richtung auf die Diodenanordnung 45 auftreffende Leitstrahl 43, beleuchtet in der dargestellten Sollposition bei allen Quadranten der Quadrantendiode 45 eine gleich grosse Fläche, so dass die erzeugten vier Ausgangssignale gleich grosse Werte haben. Bei Abweichungen von der Sollage erzeugt die Diodenanordnung 45 unterschiedliche Stromwerte, und die Signale jeweils zweier gegenüberliegender Quadranten werden über Verstärker 60, 61 auf Regler 62, 63 aufgeschaltet. Die Ausgangssignale der Regler 62, 63 werden über die Motorsteuerungen 64, 65 Stellmotoren, z.B. elektrischen Schrittmotoren 66, 67, zugeleitet, welche den Präzisionskoordinatentisch 30 verstellen. Es ist somit eine exakte Ausrichtung des die Messsonde 33 tragenden Präzisionskoordinatentisches 30 aufgrund dieser Nachführung möglich. Die Verstärker 64, 65 können aber auch, wie angedeutet, manuell durch entsprechende Betätigung von Schaltern 68, 69, 70, 71 angesteuert und damit der Präzisionskoordinatentisch 30 positioniert werden. Die in Fig. 3 als Blockschaltbild dargestellte Nachführschaltung kann aber auch zur Nachführung des Turmes 10 und der darauf angeordneten Plattform 25 benutzt werden.

In der Darstellung nach Fig. 4, wo die Rechnersteuerung mit der lediglich im Prinzip dargestellten Vorrichtung abgebildet ist, ist zu sehen, dass ein Zentralrechner 75 im Datenaustausch mit einem Steuerrechner 76 steht, welcher eine Motorsteuerung 77, 78 für den Motor 31 (Z-Koordinate) sowie für den Motor 36 (Y-Koordinate) ansteuert. Ausserdem erhält dieser Steuerrechner 76 über Aufbereitungsstufen 79, 80 Positionssignale von den Quadrantendioden und Entfernungssignale von den Laserentfernungsmessern 47, 57, und zwar für die Y-Koordinate und die Z-Koordinate. Es ist auch angedeutet, dass der Steuerrechner durch manuell eingebbare Befehle 81 ansteuerbar ist.

Die erfindungsgemässe Vorrichtung gestattet es, mit grosser Genauigkeit die Messsonde zur Erfassung von Nahfeldern in allen drei Dimensionen im Raum zu positionieren. Dabei sichern die Lasermesseinrichtungen die Sollpositionen durch Nachführen der Messsonde auch dann, wenn z.B. thermische Spannungen zu einem Verbiegen des Turmes, insbesondere bei grossen Turmlängen, führen. Ausserdem bietet diese Art der Ausrichtung die Möglichkeit, die Messsonde im Raum zu verfahren und das Nahfeld einer Antenne dabei zu erfassen. Die Geschwindigkeiten und der mechanische Aufbau der Vorrichtung sind dabei so gewählt, dass Störschwingungen beim Nachführen nicht auftreten.

**Patentansprüche**

1. Vorrichtung zum exakten Positionieren einer eine die Nahfelder von Satellitenantennen erfassende Messsonde (33) aufweisenden Abtasteinrichtung im Raum bezüglich dreier Raumkoordinaten (X, Y, Z), mit einer die Abtasteinrichtung tragenden Plattform (25), die an einem auf zwei Führungsschienen (14, 15) positionierbaren aufrechten Turm (10) höhenverstellbar angebracht ist, bei der die Abtasteinrichtung aus einem in der X-Raumkoordinatenrichtung verstellbaren und die Messsonde (33) tragenden Präzisionskoordinatentisch (30) besteht, bei der der Fuss (11) des als Rohr ausgebildeten Turmes (10) sich zur Positionierung in der Y-Raumkoordinatenrichtung mit Radialkugelbuchsen (17) auf einer der Führungsschienen (14, 15) und mit zwei in etwa senkrecht zueinander versetzten Stützbeinen (12, 13) auf beiden Führungsschienen (14, 15) der Bodenführung abstützt, bei der die Stützbeine (12, 13) mit Justiervorrichtungen (16) zum automatischen Ausrichten des Turmes (10) mit Hilfe elektronischer Neigungsmessgeräte versehen sind, bei der der Turm zwei diagonal gegenüberliegende Führungsschienen (19, 20) aufweist, an welchen Führungsrollen (27) der Plattform (25) anliegen, bei der eine zwischen Auslegern (21, 22) des Turmfusses (11) und der Turmspitze angeordnete Spindel (23) mit einer in der Plattform (25) gelagerten und durch einen Elektromotor (31) antreibbaren Kugelgewindemutter (24) zum Positionieren der Plattform (25) in der Z-Raumkoordinatenrichtung im Eingriff steht, bei der an einer Seite der Bodenführung eine ortfeste Messplatte (50) mit einer auf eine Messplatte (48) am Turmfuss (11) gerichteten Lasermesseinrichtung vorgesehen ist, zur Abstandsmessung und zur Erzeugung von Positionssignalen für eine über ein Rechensystem (75, 76) vornehmbare Nachführung der Messsonde (33) in der Y-Raumkoordinatenrichtung, und bei der der Turmfuss (11) eine Messplatte (40) aufweist mit einer auf den Präzisionskoordinatentisch (30) der Plattform (25) gerichteten Lasermesseinrichtung zur Abstandsmessung und zur Erzeugung von Positionssignalen für eine über das Rechensystem (75, 76) vornehmbare Nachführung der Messsonde (33) in der Z-Raumkoordinatenrichtung.

2. Vorrichtung nach Anspruch 1, bei der die Plattform (25) als mit einem Turmdurchgang (26) versehenes flaches sogenanntes Sandwichbauteil ausgebildet ist und bei der die Plattform (25) auf einer Seite des Turmdurchganges (26) die Kugelgewindemutter (24) den Elektromotor (31) und Baugruppen (32) zur elektrischen Steuerung und auf der anderen Seite den Präzisionskoordinatentisch (30) mit der Messsonde (33) trägt.

3. Vorrichtung nach Anspruch 1 oder 2, bei der die Stützbeine (12, 13) einen Doppel-T-Querschnitt aufweisen.

4. Vorrichtung nach einem der Ansprüche 1 bis 3, bei der die Plattform (25) durch Aufsetzen von Ballastgewichten gewichtsmässig ausgeglichen ist.

5. Vorrichtung nach einem der Ansprüche 1 bis 4, bei der dem auf der Plattform (25) angebrachten Präzisionskoordinatenstich (30) ein elektronisch steuerbarer Antrieb (66, 67) zugeordnet ist.

6. Vorrichtung nach einem der Ansprüche 1 bis 5, bei der am Turmfuss (11) ein Elektromotor (36) vorgesehen ist, der über ein Antriebsritzel mit einer parallel zu einer Führungsschiene (14) liegenden Zahnstange (35) zum Positionieren des Turmes (10) auf der Bodenführung im Eingriff steht.

7. Vorrichtung nach einem der Ansprüche 1 bis 6, bei der die Lasermesseinrichtungen zur Erzeugung von Positionssignalen aus einer vom zugeordneten Laserstrahl beaufschlagten Quadrantendiode (45, 55) bestehen, deren Ausgangssignale über die Motorsteuerung (32) die zugeordneten Elektromotore (66, 67) zur Nachführung der Messsonde (33) ansteuern.

8. Vorrichtung nach einem der vorhergehenden Ansprüche bei der für die Elektromotore zum Positionieren der Messsonde in den drei Raumkoordinatenrichtungen Schrittmotore eingesetzt sind.

## Claims

1. A device for the exact positioning of a scanning device, having a measuring or test probe (33) determining the short-range fields of satellite antennae, in space with respect to three spatial coordinates (X, Y, Z), having a platform (25) carrying the scanning device, which platform is mounted on a vertical tower (10) adjustable with respect to height and positionable on two guide rails (14, 15); in which the scanning device consists of a precision coodrinate table (30) which is adjustable in the X-spatial coordinate direction and carries the measuring or test probe (33); in which the foot (11) of the tower (10), constructed as a tube, is supported for positioning in the Y-spatial coordinate direction by radial ball boxes (17) on one of the guide rails (14, 15) and by two supporting legs (12, 13), displaced substantially at right angles to each other, on both guide rails (14, 15) of the base guide; in which the supporting legs (12, 13) are provided with adjusting devices (16) for the automatic alignment of the tower (10) with the help of electronic inclination measuring means; in which the tower has two diagonally opposite guide rails (19, 20) on which abut guide or contact rollers (27) of the platform (25); in which a spindle (23) arranged between arms (21, 22) of the tower foot (11) and the tower head is in engagement with spherical threaded nut (24) which is supported in the platform (25) and drivable by an electric motor (31), to position the platform in the Z-spatial coordinate direction; in which there is provided on one side of the bottom guide a stationary measuring plate (48) having a laser measuring arrangement directed onto a measuring plate (48) at the tower foot (11), for measuring the distance and for producing position signals for a readjustment of the measuring or test probe (33) which is dealt with via a computing system (75, 76), in the Y-spatial coordinate direction; and in which the tower foot (11) has a measuring plate (40) with a laser measuring device directed onto the precision coordinate table (30) on the precision coordinate table (30) of the platform (25) for measuring the distance and for the production of position signals for a re-adjustment of the measuring or test probe (33) in the Z-spatial coordinate direction which can be dealt with by the computer system (75, 76).

2. A device according to Claim 1, in which the platform (25) is constructed as a flat, «sandwich-type» member provided with a tower passage (26) and in which the platform (25), on one side of the tower passage (26), carries the spherical threaded nut (24), the electric motor (31) and subassemblies (32) for the electrical control and on the other side carries the precision coordinate table (30) with the measuring or test probe (33).

3. A device according to Claim 1 or 2, in which the supporting legs (12, 13) have a double T cross section.

4. A device according to one of Claims 1 to 3, in which the platform (25) is balanced physically adding ballast weights.

5. A device according to one of Claims 1 to 4, in which an electronically controllable drive (66, 67) is associated with the precision coordinate table (30) mounted on the platform (25).

6. A device according to one of Claims 1 to 5, in which at the tower foot (11) there is provided an electric motor which is in engagement, via an output pinion, with a rack (35) lying parallel to a guide rail (14), for positioning the tower (10) on the bottom guide rack.

7. A device according to one of Claims 1 to 6, in which the laser measuring devices for the production of position signals consist of a quadrant diode (45, 55) illuminated by an associated laser beam, the output signals of which diode control, via the motor control (32), the associated electric motors (66, 67) for the re-adjustment of the measuring or test probe (33).

8. A device according to one of the preceding Claims, in which stepping motors are used for the electric motors for positioning the measuring or test probe in the three spatial coordinate directions.

## Revendications

1. Dispositif pour positionner exactement dans l'espace, suivant les trois coordonnées de l'espace (X, Y, Z), un dispositif de détection comportant une sonde de mesure (33) pour détecter les zones proches d'antennes de satellite, avec une plate-forme (25) portant le dispositif de détection, et qui est prévue de façon réglable en hauteur sur une colonne (10) verticale susceptible d'être positionnée sur deux rails du guidage (14, 15), le dispositif de détection se composant d'une table de coordonnées de précision (30) réglable dans la direction des coordonnées X et portant la sonde de mesure (33), le pied (11) de la colonne (10) en forme de tube s'appuyant pour le positionnement dans la direction des coordonnées Y, sur les deux rails de guidage (14, 15) du moyen de guidage au sol, par des douilles à billes radiales (17) venant prendre chaque fois sur l'un des rails de guidage (14, 15), ces douilles étant prévues sur deux jambes d'appui (12, 13) sensiblement perpendiculaires l'une à l'autre, les jambes d'appui (12, 13) étant munies de dispositifs d'ajustage (16) pour aligner automatiquement la colonne (10) à l'aide d'appareils de mesure électroniques d'inclinaison, la colonne comportant deux rails de guidage (19, 20) diamétralement opposés, rails avec lesquels coopèrent les galets de guidage (27) de la plate-forme (25), une broche (27) montée entre deux bras (21, 22) prévus respectivement au niveau du pied (11) et de la pointe de colonne, coopérant avec un écrou à vis (24) entraîné par un moteur électrique (31) et monté dans la plate-forme (25) pour positionner la plate-forme (25) suivant l'axe des coordonnées Z, une plaque de mesure (50) fixe munie d'un télémètre à laser dirigé vers la plaque de mesure (48) au pied (11) de la colonne étant prévue d'un côté du moyen de guidage au sol pour mesurer la distance et générer des signaux de position destinés à un asservissement de la sonde de mesure (33) dans la direction des coordonnées Y par l'intermédiaire d'un système de calcul (75, 76), et le pied (11) de la colonne comporte une plaque de mesure (40) équipée d'un télémètre à laser dirigé sur une table de coordonnées de précision (30) de la plate-forme (25) pour mesurer la distance et générer des signaux de position pour asservir la sonde (33) dans la direction des coordonnées Z par l'intermédiaire du système de calcul (75, 76).

2. Dispositif selon la revendication 1, caractérisé en ce que la plate-forme (25) est une pièce à structure en sandwich, plane, munie d'un passage (26) pour la colonne et dont la plate-forme (25) porte d'un côté du passage (26) l'écrou à vis (24), le moteur électrique (31) et les éléments (32) du circuit de commande électrique et de l'autre côté la table de coordonnées de précision (30) et la sonde de mesure (33).

3. Dispositif selon la revendication 1 ou 2, caractérisé en ce que les jambes d'appui (12, 13) ont une section en forme de double T.

4. Dispositif selon l'une des revendications 1 à 3, caractérisé en ce que la masse de la plate-forme (25) est équilibrée par la mise en place de ballast.

5. Dispositif selon l'une des revendications 1 à 4, caractérisé en ce que la table à coordonnées de précision (30) de la plate-forme (25) est munie d'un moyen d'entraînement à commande électronique (66, 67).

6. Dispositif selon l'une des revendications 1 à 5, caractérisé par un moteur électrique (36) prévu au pied (11) de la colonne, ce moteur engrénant par son pignon de sortie avec une crémaillère (35) parallèle à un rail de guidage (14) pour positionner la colonne (10) sur le moyen de guidage au sol.

7. Dispositif selon l'une des revendications 1 à 6, caractérisé en ce que les télémètres à laser donnant les signaux de position se composent d'une diode à quadrants (45, 55) recevant le faisceau-laser, diode dont les signaux de sortie commmandent les moteurs électriques (66, 67) d'asservissement de la sonde de mesure (33) par l'intermédiaire du circuit de commande de moteur (32).

8. Dispositif selon l'une quelconque des revendications précédentes, caractérisé en ce que les moteurs électriques de positionnement de la sonde de mesure suivant les trois directions de l'espace sont des moteurs pas à pas.

FIG. 1

FIG. 2

FIG. 3

FIG. 4